# EUROPÄISCHE PATENTSCHRIFT

(11) **EP 1 155 082 B1**
(45) Veröffentlichungstag und Bekanntmachung des Hinweises auf die Patenterteilung: **22.09.2004**
(21) Anmeldenummer: 99963471.0
(22) Anmeldetag: 10.12.1999
(51) Int. Cl.: C08L 9/00, C08L 63/00, C09J 163/00

(54) **SCHLAGFESTE EPOXIDHARZ-ZUSAMMENSETZUNGEN**
SHOCK-RESISTANT EPOXIDE RESIN COMPOSITIONS
COMPOSITIONS DE RESINE EPOXY RESISTANTES AUX CHOCS

(30) Priorität: 19.12.1998 DE 19858921
(43) Veröffentlichungstag der Anmeldung: 21.11.2001
(73) Patentinhaber: Henkel Teroson GmbH, 69123 Heidelberg (DE)
(72) Erfinder: SCHENKEL, Hubert, D-69207 Sandhausen (DE)
(74) Vertreter: Scheffler, Ingolf
(86) Internationale Anmeldenummer: PCT/EP1999/009732
(87) Internationale Veröffentlichungsnummer: WO 2000/037554

(56) Entgegenhaltungen:
- EP-A- 0 308 664
- EP-A- 0 338 985
- EP-A- 0 449 776

## Beschreibung

Die vorliegende Erfindung betrifft die Verwendung von Gemischen aus speziellen Dien-Copolymeren und Phenol-terminierten Polyurethanen oder Polyharnstoffen im Gemisch mit Epoxidharzen und/oder Addukte von Epoxidharzen an Dien-Copolymere und/oder das Polyurethan oder den Polyharnstoff als schlagfeste Epoxidharz-Klebstoffe mit besonders guten Tieftemperatureigenschaften, sowie reaktive, vorzugsweise einkomponentige Schmelzklebstoffe mit guter Tieftemperaturschlagfestigkeit.

Reaktive Schmelzklebstoffe auf Epoxidbasis sind bekannt. Im Maschinen-, Fahrzeug- oder Gerätebau, insbesondere im Flugzeugbau, Schienenfahrzeugbau oder Kraftfahrzeugbau werden die Bauteile aus den verschiedenen metallischen Komponenten und/oder Verbundwerkstoffen in zunehmendem Maße mit Hilfe von Klebstoffen gefügt. Für strukturelle Verklebungen mit hohen Anforderungen an die Festigkeit werden in großem Umfang Epoxidklebstoffe eingesetzt, insbesondere als heißhärtende, einkomponentige Klebstoffe, die häufig auch als reaktive Schmelzklebstoffe formuliert werden. Reaktive Schmelzklebstoffe sind dabei Klebstoffe, die bei Raumtemperatur fest sind und bei Temperaturen bis zu etwa 80 bis 90°C erweichen und sich wie ein thermoplastisches Material verhalten. Erst bei höheren Temperaturen ab etwa 100°C werden die in diesen Schmelzklebstoffen vorhandenen latenten Härter thermisch aktiviert, so daß eine irreversible Aushärtung zu einem Duroplasten erfolgt. Zum Fügen der Bauteile, z. B. in der Fahrzeugindustrie, wird der Klebstoff zunächst warm auf mindestens eine Substratoberfläche aufgebracht, die zu verbindenden Bauteile werden dann gefügt. Beim Abkühlen erstarrt der Klebstoff dann und schafft durch dieses physikalische Erstarren eine ausreichende Handhabungsfestigkeit, d. h. eine vorläufige Verbindung. Die so miteinander verbundenen Bauteile werden in den verschiedenen Wasch-, Phosphatier- und Tauchlack-Bädem weiter behandelt. Erst anschließend wird der Klebstoff in einem Ofen bei höheren Temperaturen gehärtet.

Konventionelle Klebstoffe und Schmelzklebstoffe auf Basis von Epoxidharzen sind in ausgehärtetem Zustand hart und spröde. Die mit Ihnen erhaltenen Klebungen weisen zwar in aller Regel eine sehr hohe Zugscherfestigkeit auf. Bei schälender, schlagender oder schlagschälender Beanspruchung, insbesondere bei tieferen Temperaturen platzen diese jedoch ab, so daß es bei dieser Beanspruchungsart der Klebefuge leicht zum Bindungsverlust kommt. Es hat daher bereits zahlreiche Vorschläge gegeben, Epoxidharze durch flexible Zusätze so zu modifizieren, daß ihre Sprödigkeit deutlich reduziert wird. Ein gängiges Verfahren beruht auf der Verwendung spezieller Kautschukaddukte an Epoxidharze, die als heterodisperse Phase in der Epoxidharzmatrix eingelagert sind, so daß die Epoxide schlagfester werden, diese Epoxidharz-Zusammensetzungen werden auch als "Toughened" bezeichnet. Eine gängige, bekannte Modifizierung von Epoxidharzen der vorgenannten Art besteht in der Umsetzung eines Polybutadien-Co-Acrylnitrilcopolymers mit Caboxyl-Endgruppen mit einem Epoxidharz. Dieses Kautschuk-Epoxidaddukt wird dann in einem oder mehreren unterschiedlichen Epoxidharzen eindispergiert. Dabei muß die Reaktion des Epoxidharzes mit dem carboxylgruppenhaltigen Butadien-Acrylnitrilkautschuk so geführt werden, daß es nicht zu einer vorzeitigen Aushärtung des Adduktes führt. Obwohl derartig modifizierte Epoxidharz-Zusammensetzungen in bezug auf ihre Schlagfestigkeit bereits eine deutliche Verbesserung gegenüber den unmodifizierten Epoxidharzen darstellen, ist ihr Verhalten gegenüber schälenden bzw. schlagschälenden Beanspruchungen immer noch nicht ausreichend.

Aus der EP-A-0 343 676 sind Klebstoffzusammensetzungen bekannt, die aus einem Gemisch von mehreren Epoxidharzen, einem phenolischen Harz sowie einem Polyurethan-Epoxidaddukt zusammengesetzt sind: Das darin enthaltene Polyurethan-Epoxidaddukt besteht aus einem Umsetzungsprodukt von mehreren Polyalkylenglykolhomo- und Copolymeren mit primären und sekundären OH-Gruppen, einem Diisocyanat und mindestens einem Epoxidharz. Es wird angegeben, daß diese Schmelzklebstoffzusammensetzung gegenüber verschiedenen, kommerziellen einkomponentigen Schmelzklebstoffzusammensetzungen in ihrer Scherfestigkeit, Schälfestigkeit und Schlagfestigkeit verbessert sind, über die Klebstoffeigenschaften der ausgehärteten Klebefuge bei tiefen Temperaturen werden keine Angaben gemacht.

Die US-A-5 290 857 beschreibt eine Epoxidharzklebstoffzusammensetzung enthaltend ein Epoxidharz sowie ein pulverförmiges Kern/Schalepolymer und einen wärmeaktivierbaren Härter für das Epoxidharz. Das pulverförmige Kern/Schalepolymer ist zusammengesetzt aus einem Kern enthaltend ein Acrylat- oder Methacrylatpolymer mit einer Glasübergangstemperatur von -30°C oder niedriger und einer Schale enthaltend ein Acrylat- oder Methacrylatpolymer, das vernetzende Monomereinheiten enthält und dessen Glasübergangstemperatur größer oder gleich 70°C ist, wobei das Gewichtsverhältnis des Kems zur Schale im Bereich zwischen 10:1 bis 1:4 liegt. Es wird angegeben, daß diese Zusammensetzungen ausgezeichnete Klebstoffeigenschaften wie Schlagfestigkeit, Zugscherfestigkeit und T-Schälfestigkeit haben und außerdem eine gute partielle Gelierbarkeit besitzen. Angaben über die Eigenschaften von Verklebungen mit diesen Klebstoffen bei tiefen Temperaturen werden nicht gemacht.

In analoger Weise beschreibt die US-A-5 686 509 eine adhäsionsverstärkende Zusammensetzung für Epoxidharze bestehend aus pulverförmigen Copolymerteilchen, die ionisch mit einem mono- oder divalenten Metallkation vernetzt sind. Dabei ist der Kembereich des Kern/Schalepolymers aus einem Dienmonomer und gegebenenfalls vemetzenden Monomereinheiten zusammengesetzt, der eine Glasübergangstemperatur kleiner oder gleich -30°C hat. Das Schalencopolymer hat eine Glasübergangstemperatur von mindestens 70°C und ist aus Acrylat oder Methacrylatmonomereinheiten und radikalisch polymerisierbaren ungesättigten Carbonsäureeinheiten zusammengesetzt. Die Klebstoffzusammensetzung soll dabei auf 100 Teile Epoxidharz 15 bis 60 Gewichtsteile des adhäsionsverstärkenden Copolymerpulvers und 3 bis 30 Gewichtsteile eines hitzeaktivierbaren Härtungsagenz haben. Diese Zusammensetzungen werden zur Anwendung als Strukturklebstoffe für Automobilteile empfohlen. Angaben über die Tieftemperatureigenschaften derartiger Verklebungen werden nicht gemacht.

Aus der EP-A-0 308 664 sind Epoxidharz-Zusammensetzungen bekannt, die ein Epoxid-Addukt eines carboxylgruppenhaltigen Copolymeren auf Basis von Butadien-Acrylnitril oder ähnlichen Butadiencopolymeren enthalten sowie ein Umsetzungsprodukt eines in Epoxidharzen löslichen oder dispergierbaren elastomeren Prepolymeren mit endständigen Isocyanatgruppen mit einem Polyphenol oder Aminophenol sowie nachfolgender Umsetzung dieses Adduktes mit einem Epoxidharz. Weiterhin können diese Zusammensetzungen ein oder mehrere Epoxidharze enthalten. Fernerhin werden zur Härtung für diese Zusammensetzungen aminofunktionelle Härter, Polyaminoamide, Polyphenole, Polycarbonsäuren und ihre Anhydride oder katalytische Härtungsmittel und gegebenenfalls Beschleuniger vorgeschlagen. Es wird angegeben, daß diese Zusammensetzungen sich als Klebstoffe eignen, die je nach konkreter Zusammensetzung hohe Festigkeit, hohe Glasübergangstemperatur, hohe Schälfestigkeit, hohe Schlagzähigkeit oder hohe Rißfortpflanzungsbeständigkeit haben können.

Die EP-A-0 308 664 macht keine Angaben darüber, ob die dort beschriebenen Zusammensetzungen für Klebstoffe mit guter Tieftemperatur-Schlagfestigkeit geeignet sind.

Die EP-A-0 353 190 beschreibt Epoxidharz-Zusammensetzungen enthaltend ein Addukt aus einem Epoxidharz und einem carboxylierten Butadien-Acrylnitrilcopolymeren sowie ein Umsetzungsprodukt eines hydroxyl-, mercapto- oder aminoterminierten Polyalkylenglycols mit einer Phenolcarbonsäure mit nachfolgender Umsetzung der phenolischen Gruppe mit einem Epoxidharz vor. Der EP-A-0 353 190 ist zu entnehmen, daß diese Zusammensetzungen sich zur Herstellung von Klebstoffen, Klebefilmen, Patches, Dichtungsmassen, Lacken oder Matrixharzen eignet. Es werden keine Angaben darüber gemacht, ob die derart hergestellten Klebstoffe gute Tieftemperatur-Schlagfestigkeit aufweisen.

Gemäß der Lehre der EP-A-0 354 498 bzw. EP-A-0 591 307 lassen sich reaktive Schmelzklebstoffzusammensetzungen aus einer Harzkomponente, mindestens einem thermisch aktivierbaren latenten Härter für die Harzkomponente sowie gegebenenfalls Beschleuniger, Füllstoffe, Thixotropierhilfsmittel und weiteren üblichen Zusätzen herstellen, wobei die Harzkomponente durch die Umsetzung von einem bei Raumtemperatur festen Epoxidharz und einem bei Raumtemperatur flüssigen Epoxidharz mit einem oder mehreren linearen oder verzweigten Polyoxypropylen mit Amino-Endgruppen erhältlich sind. Dabei sollen die Epoxidharze in einer solchen Menge, bezogen auf das Amino-terminierte Polyoxypropylen, eingesetzt werden, daß ein Überschuß an Epoxidgruppen bezogen auf die Aminogruppen gewährleistet ist. Diese Klebstoffzusammensetzungen weisen bereits einen hohen Schälwiderstand im Winkelschälversuch auf, der auch bei tiefen Temperaturen erhalten bleibt.

Aufgabe der vorliegenden Erfindung ist es, reaktive Klebstoffe der eingangs genannten Art dahingehend weiter zu verbessern, daß sie eine ausreichende Flexibilität aufweisen, eine erhöhte Schälfestigkeit nicht nur bei Raumtemperatur sondern insbesondere auch bei tiefen Temperaturen (unter 0°C) aufweisen. Insbesondere soll die Schälfestigkeit bei tiefen Temperaturen und schlagartiger Belastung einen möglichst hohen Wert aufweisen, damit strukturell geklebte Bauteile auch im Falle eines Unfalls (Crash-Verhalten) den modernen Sicherheitsanforderungen im Fahrzeugbau entsprechen. Dabei sollen diese Verbesserungen ohne Beeinträchtigung der Schälfestigkeit bei hohen Temperaturen sowie der Zugscherfestigkeit erzielt werden. Die reaktiven Klebstoffe müssen darüber hinaus unmittelbar nach der Applikation und vor dem endgültigen Aushärten eine ausreichende Auswaschbeständigkeit haben. Dazu müssen die Klebstoff-Zusammensetzungen als Schmelzklebstoff, als hochviskoser, warm zu verarbeitender Klebstoff formulierbar sein. Eine andere Möglichkeit ist die Formulierung als Klebstoff, der durch eine thermische Vorreaktion im sogenannten "Rohbau-Ofen" oder durch Induktionsheizung der Fügeteile geliert werden kann.

Die erfindungsgemäße Lösung der Aufgabe ist den Ansprüchen zu entnehmen. Sie besteht im wesentlichen in der Verwendung von Zusammensetzungen, die
A) ein Copolymeres mit mindestens einer Glasübergangstemperatur von -30°C oder niedriger und gegenüber Epoxiden reaktiven Gruppen sowie
B) ein Reaktionsprodukt aus einem Polyurethan-Prepolymer und einem Polyphenol oder Aminophenol sowie
C) mindestens ein Epoxidharz enthalten
als Strukturklebstoffe mit guter Tieftemperatur-Schlagfestigkeit.

Ein Strukturklebstoff im Sinne dieser Erfindung ist dabei ein Klebstoff, der bei einer Stahlverklebung mindestens eine Zugscherfestigkeit von 15 MPa bei Raumtemperatur besitzt und bei einer erhöhten Temperatur von 90°C immer noch eine Zugscherfestigkeit einer Stahlverklebung von mehr als 10 MPa gewährleistet. Eine gute Tieftemperatur-Schlagfestigkeit eines derartigen Klebstoffes ist dann gegeben, wenn die Schlagschälarbeit bei 2 m/sec nach ISO 11343 bei -20°C mindestens bei 5 J liegt.

Dabei können die Komponenten A), B) und C) jeweils auch Gemische von Verbindungen der angegebenen Art sein. Vorzugsweise werden die Komponenten A) und B) in separaten Reaktionen mit einem großen stöchiometrischen Überschuß an Epoxidharzen umgesetzt und anschließend ggf. mit weiteren Epoxidharzen, thermisch aktivierbaren Härtern und/oder weiteren Zusätzen gemischt.

Beispiele für die Copolymeren der Aufbaukomponente A) sind 1,3-Dienpo-Iymere mit Carboxylgruppen und weiteren polaren ethylenisch ungesättigten Comonomeren. Als Dien kann dabei Butadien, Isopren oder Chloropren eingesetzt werden, bevorzugt ist Butadien. Beispiele für polare, ethylenisch ungesättigte Comonomere sind Acrylsäure, Methacrylsäure, niedere Alkylester der Acryl- oder Methacrylsäure, beispielsweise deren Methyl- oder Ethylester, Amide der Acryl- oder Methacrylsäure, Fumarsäure, Itakonsäure, Maleinsäure oder deren niedrere Alkylester oder Halbester, oder Maleinsäure- oder Itakonsäureanhydrid, Vinylester wie beispielsweise Vinylacetat oder insbesondere Acrylnitril oder Methacrylnitril. Ganz besonders bevorzugte Copolymere A) sind Carboxylterminierte Butadienacrylnitrilcopolymere (CTBN), die in flüssiger Form unter dem Handelsnamen Hycar von der Firma B. F. Goodrich angeboten werden. Diese haben Molekulargewichte zwischen 2000 und 5000 und Acrylnitrilgehalte zwischen 10 % und 30 %. Konkrete Beispiele sind Hycar CTBN 1300 X 8.1300 X 13 oder 1300 X 15.

Weiterhin können als Aufbaukomponente A) auch die aus der US-A-5 290 857 bzw. aus der US-A-5 686 509 bekannten Kern/Schale-Polymeren eingesetzt werden. Dabei sollen die Kemmonomeren eine Glasübergangstemperatur von kleiner oder gleich -30 °C haben, diese Monomeren können ausgewählt werden aus der Gruppe der vorgenannten Dienmonomeren oder geeigneten Acrylat- oder Methacrylatmonomeren, ggf. kann das Kernpolymer in geringer Menge vernetzende Comonomereinheiten enthalten. Die Schale ist dabei aus Copolymeren aufgebaut, die eine Glasübergangstemperatur von mindestens 60 °C hat. Die Schale ist vorzugsweise aus niederen Alkylacrylat oder Methacrylat-Monomereinheiten (Methyl- bzw. Ethylester) sowie polaren Monomeren wie (Meth)acrylnitril, (Meth)acrylamid, Styrol oder radikalisch polymerisierbaren ungesättigten Carbonsäuren oder Carbonsäureanhydriden.

Besonders bevorzugt für die Aufbaukomponente A) sind jedoch die Addukte aus Epoxidharzen und den vorgenannten flüssigen CTBN-Kautschuken.

Die Komponente B) kann durch die nachfolgende Formel I dargestellt werden,

R¹-[X-(C=O)-NH-R²-NH-(C=O)-Y-R³-(Z)ₘ]ₙ (I)

Dabei bedeuten
m = 1 oder 2,
n = 2 oder 3,
R¹ ein Rest eines Polyalkylenglykols nach dem Entfernen der funktionellen Gruppen (Hydroxyl- oder Amino-Gruppen),
R² = C₆- bis C₁₄-Alkyl, Aryl, Aralkyl (Rest eines Diisocyanates nach Entfernen der Isocyanatgruppen),
X,Y = -O-, -S- oder -NR⁴-, wobei R⁴ = H oder C₁- bis C₄-Alkyl oder Phenyl,
R³ = ein carbocyclisch-aromatischer oder araliphatischer m + 1 wertiger Rest mit direkt an den aromatischen Ring gebundenen Gruppen Z und Z = -OH oder -NHR⁴ (Rest eines Polyphenols oder Aminophenols nach Entfernen der funktionellen Gruppen).

Dabei ist die Komponente B) ein Reaktionsprodukt aus einem Di- oder Polyamin oder Di- oder Polyol und einem Diisocyanat. Das stöchiometrische Verhältnis zwischen Aminogruppen oder Hydroxylgruppen und Isocyanatgruppen wird dabei so gewählt, daß die Isocyanatgruppen im stöchiometrischen Überschuß sind, vorzugsweise beträgt dieser stöchiometrische Überschuß 1,5 bis 2 gegenüber den Aminogruppen oder Hydroxylgruppen. Das so entstandene Isocyanat-terminierte Polyurethan-Prepolymer wird dann mit einem Überschuß an Polyphenol oder Aminophenol so umgesetzt, daß das Reaktionsprodukt phenolische oder Amino-Endgruppen trägt. In dieses Reaktionsgemisch können zusätzlich noch Polyesterpolyole eingemischt werden. Das so entstandene Reaktionsgemisch wird in der Regel direkt mit den weiteren Zusammensetzungs-Bestandteilen wie der Komponente A) und weiteren Epoxyharzen vermischt, die Reaktionsmischung kann jedoch auch mit einem großen stöchiometrischen Überschuß an Epoxidharzen so umgesetzt werden, daß ein Additions produkt mit terminalen Epoxidgruppen entsteht.

Für die Addition der Polyphenole oder Aminophenole können im Prinzip eine Vielzahl von Polyurethanprepolymeren verwendet werden, bevorzugt werden jedoch solche, die aus hydroxyterminierten oder aminoterminierten Polyalkylenglykolen, insbesondere di- oder trifunktionelle hydroxyterminierte oder aminoterminierte Polypropylenglykole, Polyethylenglykole oder Copolymere von Propylenglykol und Ethylenglykol sowie insbesondere auch Polytetramethylenglykole (Poly-THF). Außerdem sind auch aminoterminierte oder hydroxyterminierte Polybutadiene als Aufbaukomponenten für die Polyurethanprepolymere geeignet. Die hydroxy- oder aminoterminierten Polyalkylenglykole sowie die entsprechenden Polybutadien-Derivate haben Molekulargewichte zwischen 400 und 5000.

Als Di- oder Polyisocyanate zur Herstellung der Polyurethanprepolymere eignen sich prinzipiell alle in der Polyurethanchemie bekannten aromatischen, aliphatischen oder cycloaliphatischen Polyisocyanate.

Beispiele für geeignete aromatische Polyisocyanate sind: Alle Isomeren des Toluylendiisocyanats (TDI) entweder in isomerenreiner Form oder als Mischung mehrerer Isomerer, Naphthalin-1,5-Diisocyanat, Diphenylmethan-4,4'-Diisocyanat (MDI), Diphenylmethan-2,4'-Diisocyanat sowie Mischungen des 4,4'-Diphenylmethandiisocyanats mit dem 2,4'-Isomeren oder deren Mischungen mit höherfunktionellen Oligomeren (sogenanntes Roh-MDI). Beispiele für geeignete cycloaliphatische Polyisocyanate sind die Hydrierungsprodukte der vorgenannten aromatischen Diisocyanate wie z.B. das 4,4'-Dicyclohexylmethandiisocyanat (H₁₂MDI), 1-Isocyanatomethyl-3-Isocyanato-1,5,5-Trimethyl-cyclohexan (Isophoron-Diisocyanat, IPDI), Cyclohexan-1,4-Diisocyanat, hydriertes Xylylen-Diisocyanat (H₆XDI), m- oder p-Tetramethylxylendiisocyanat (m-TMXDI, p-TMXDI) und Dimerfettsäure-Diisocyanat. Beispiele für aliphatische Polyisocyanate sind Hexan-1,6-Diisocyanat (HDI), 1,6-Diisocyanato-2,2,4-Trimethylhexan, 1,6-Diisocyanato-2,4,4-Trimethylhexan, Butan-1,4-Diisocyanat sowie 1,12-Dodecandiisocyanat (C₁₂DI). Besonders bevorzugt sind dabei die aliphatischen, cycloaliphatischen oder auch araliphatische Diisocyanate.

Die für das Reaktionsprodukt B) einzusetzenden Polyphenole oder Aminophenole sind entweder aromatische Di- oder Trihydroxyverbindungen, die sich von einem ein- oder mehrkemigen carbocyclisch-aromatischen Rest ableiten oder es sind die entsprechenden Amino-hydroxyverbindungen. Dabei können die aromatischen Ringe entweder kondensiert oder über Brükkenglieder oder über eine kovalente Bindung miteinander verknüpft sein.

Beispiele für die erstgenannten Verbindungen sind Hydrochinon, Resorcin, Brenzkatechin, Isomere des Dihydroxynaphthalins (Isomeren-rein oder Mischung mehrerer Isomerer) Isomere des Dihydroxyanthracens sowie die entsprechenden Amino-hydroxy-verbindungen. Die Polyphenole oder Aminophenole, die sich von carbocyclisch-aromatischen Verbindungen herleiten, deren aromatische Kerne über Brückenglieder verknüpft sind lassen sich durch die allgemeine Formel II darstellen:

Z---AR---B---AR---Z (II)

worin Z die oben definierte Bedeutung hat,
AR steht für einen einkemigen aromatischen Rest, der ggf. durch Alkyl oder Alkenylreste weiter substituiert sein kann.
B steht für das Brückenglied, dieses kann ausgewählt werden aus der Gruppe bestehend aus einer covalenten Bindung, -CR⁵R⁶-, -O-, -S-, -SO₂-, -CO-, -COO-, -CONR⁷- und SiR⁸R⁹-. Dabei bedeuten R⁵, R⁶ und R⁷ unabhängig voneinander Wasserstoff, -CF₃ oder C₁-C₆ Alkyl oder R⁵ und R⁶ bilden zusammen mit dem gemeinsamen C-Atom einen cycloaliphatischen Rest mit 5 bis 7 Ring C-Atomen, R⁸ und R⁹ bedeuten C₁-C₆-Alkyl. Dabei können die beiden Gruppierungen B und Z in der Formel II unabhängig voneinander in ortho-, meta- oder para-Stellung angeordnet sein. Besonders bevorzugte Verbindungen der Formel II sind 4,4'-Dihydroxydiphenyl oder die Bisphenole A und/oder F.

Die in der Komponente B) gegebenenfalls enthaltenen Polyesterpolyole sind an sich bekannte Polyesterpolyole, wie sie in der Polyurethanchemie z. B. zur Herstellung von Schmelzklebstoffen verwendet werden.

Beispiele für derartige Polyesterpolyole sind Umsetzungsprodukte von Dicarbonsäuren, wie Glutarsäure, Adipinsäure, Sebazinsäure, Korksäure, 3,3-Dimethyl-Glutarsäure, Terephthalsäure, Isophthalsäure, Dimerfettsäure mit niedermolekularen difunktionellen Alkoholen wie z.B. Ethylenglykol, Propylenglykol, 1,4-Butandiol, Diethylenglykol, Triethylenglykol oder Dimerfettalkohol. Ggf. können die geeigneten Polyesterpolyole auch leicht verzweigt sein, d.h. zu ihrer Herstellung wurden untergeordnete Mengen einer Tricarbonsäure bzw. eines trifunktionellen Alkohols verwendet.

Als Epoxidharze für die Komponente C) bzw. für die Epoxid-Adduktbildung bzw. zur Abmischung der Komponenten A) und B) eignen sich eine Vielzahl von Polyepoxiden, die mindestens 2 1,2-Epoxigruppen pro Molekül haben. Das Epoxid-Äquivalent dieser Polyepoxide kann zwischen 150 und 4000 variieren. Die Polyepoxide können grundsätzlich gesättigte, ungesättigte, cyclische oder acyclische, aliphatische, alicyclische, aromatische oder heterocyclische Polyepoxidverbindungen sein. Beispiele für geeignete Polyepoxide schließen die Polyglycidylether ein, die durch Reaktion von Epichlorhydrin oder Epibromhydrin mit einem Polyphenol in Gegenwart von Alkali hergestellt werden. Hierfür geeignete Polyphenole sind beispielsweise Resorcin, Brenzkatechin, Hydrochinon, Bisphenol A (Bis-(4-Hydroxy-phenyl)-2,2-propan)), Bisphenol F (Bis(4-hydroxyphenyl)methan), Bis(4-hydroxyphenyl)-1,1-isobutan, 4,4'-Dihydroxybenzophenon, Bis(4-hydroxyphenyl)-1,1-ethan, 1,5-Hydroxynaphthalin.

Weitere prinzipiell geeignete Polyepoxide sind die Polyglycidylether von Polyalkoholen oder Diaminen. Diese Polyglycidylether leiten sich von Polyalkoholen wie Ethylenglykol, Diethylenglykol, Triethylenglykol, 1,2-Propylenglykol, 1,4-Butylenglykol, Triethylenglykol, 1,5-Pentandiol, 1,6-Hexandiol oder Trimethylolpropan ab.

Weitere Polyepoxide sind Polyglycidylester von Polycarbonsäuren, beispielsweise Umsetzungen von Glycidol oder Epichlorhydrin mit aliphatischen oder aromatischen Polycarbonsäuren wie Oxalsäure, Bernsteinsäure, Glutarsäure, Terephthalsäure oder Dimerfettsäure.

Weitere Epoxide leiten sich von den Epoxidierungsprodukten olefinisch ungesättigter cycloaliphatischer Verbindungen oder von nativen Ölen und Fetten ab.

Ganz besonders bevorzugt werden die Epoxidharze, die sich durch Reaktion von Bisphenol A oder Bisphenol F und Epichlorhydrin ableiten. Dabei werden in der Regel Mischungen aus flüssigen und festen Epoxidharzen eingesetzt, wobei die flüssigen Epoxidharze vorzugsweise auf der Basis des Bisphenols A sind und ein hinreichend niedriges Molekulargewicht aufweisen. Insbesondere für die Adduktbildung der Komponenten A) und B) werden bei Raumtemperatur flüssige Epoxidharze eingesetzt, die in der Regel ein Epoxid-Äquivalentgewicht von 150 bis etwa 220 haben, besonders bevorzugt ist ein Epoxi-Äquivalentgewichtbereich von 182 bis 192.

Die Härte des reaktiven Klebstoffes im erkalteten Zustand, d. h. insbesondere nach dem Auftragen auf das zu fügende Substrat, aber vor der Aushärtung, hängt vom Kondensationsgrad und damit Molekulargewicht insbesondere der Komponente B) ab sowie vom Verhältnis von festem Epoxidharz zu flüssigem Epoxidharz. Je höher der Kondensationsgrad (und damit das Molekulargewicht) des Kondensationsproduktes B) ist und je größer der Anteil an festem Epoxidharz in der Zusammensetzung ist, um so härter ist der erkaltete, semikristalline Klebstoff.

Als thermisch aktivierbare oder latente Härter für das Epoxidharz-Bindemittelsystem aus den Komponenten A), B) und C) können Guanidine, substituierte Guanidine, substituierte Harnstoffe, Melaminharze, Guanamin-Derivate, cyclische tertiäre Amine, aromatische Amine und/oder deren Mischungen eingesetzt werden. Dabei können die Härter sowohl stöchiometisch mit in die Härtungsreaktion einbezogen sein, sie können jedoch auch katalytisch wirksam sein. Beispiele für substituierte Guanidine sind Methylguanidin, Dimethylguanidin, Trimethylguanidin, Tetramethylguanidin, Methylisobiguanidin, Dimethylisobiguanidin, Tetramethylisobiguanidin, Hexamethylisobiguanidin, Hepamethylisobiguanidin und ganz besonders Cyanoguanidin (Dicy-andiamid). Als Vertreter für geeignete Guanamin-Derivate seien alkylierte Benzoguanamin-Harze, Benzoguanamin-Harze oder Methoxymethylethoxymethylbenzoguanamin genannt. Für die einkomponenten, hitzehärtenden Schmelzklebstoffe ist selbstverständlich das Auswahlkriterium die niedrige Löslichkeit dieser Stoffe bei Raumtemperatur in dem Harzsystem, so daß hier feste, feinvermahlene Härter den Vorzug haben, insbesondere ist Dicyandiamid geeignet. Damit ist eine gute Lagerstabilität der Zusammensetzung gewährleistet.

Zusätzlich oder anstelle von den vorgenannten Härtern können katalytisch wirksame substituierte Harnstoffe eingesetzt werden. Dies sind insbesondere der p-Chlorphenyl-N,N-dimethylhamstoff (Monuron), 3-Phenyl-1,1-dimethylharnstoff (Fenuron) oder 3,4-Dichlorphenyl-N,N-dimethylharnstoff (Diuron). Prinzipiell können auch katalytisch wirksame tertiäre Acryl- oder Alkyl-Amine, wie beispielsweise das Benzyldimethylamin, Tris(dimethylamino)phenol, Piperidin oder Piperidinderivate eingesetzt werden, diese haben jedoch vielfach eine zu hohe Löslichkeit in dem Klebstoffsystem, so daß hier keine brauchbare Lagerstabilität des einkomponentigen Systems erreicht wird. Weiterhin können diverse, vorzugsweise feste Imidazolderivate als katalytisch wirksame Beschleuniger eingesetzt werden. Stellvertretend genannt seien 2-Ethyl-2-methylimidazol, N-Butylimidazol, Benzimidazol sowie N-C₁ bis C₁₂-Alkylimidazole oder N-Arylimidazole.

In der Regel enthalten die erfindungsgemäßen Klebstoffe weiterhin an sich bekannte Füllstoffe wie zum Beispiel die diversen gemahlenen oder gefällten Kreiden, Ruß, Calcium-Magnesiumcarbonate, Schwerspat sowie insbesondere silicatische Füllstoffe vom Typ des Aluminium-Magnesium-Calcium-Silicats, z. B. Wollastonit, Chlorit.

Weiterhin können die erfindungsgemäßen Klebstoffzusammensetzungen gängige weitere Hilfs- und Zusatzmittel wie z. B. Weichmacher, Reaktiwerdünner, Rheologie-Hilfsmittel, Netzmittel, Alterungsschutzmittel, Stabilisatoren und/oder Farbpigmente enthalten.

Die erfindungsgemäßen Klebstoffe lassen sich einerseits als einkomponentige Klebstoffe formulieren, wobei diese sowohl als hochviskose warm applizierbare Klebstoffe formuliert werden können als auch als thermisch härtbare Schmelzklebstoffe. Weiterhin können diese Klebstoffe als einkomponentige vorgelierbare Klebstoffe formuliert werden, im letztgenannten Fall enthalten die Zusammensetzungen entweder feinteilige thermoplastische Pulver wie z. B. Polymethacrylate, Polyvinylbutyral oder andere thermoplastische (Co)polymere oder das Härtungssystem ist so abgestimmt, daß ein zweistufiger Härtungsprozeß stattfindet, wobei der Gelierungsschritt nur eine teilweise Aushärtung des Klebstoffes bewirkt und die Endaushärtung im Fahrzeugbau z. B. in einem der Lackieröfen, vorzugsweise der KTL-Ofen, stattfindet.

Die erfindungsgemäßen Klebstoffzusammensetzungen können auch als zweikomponentige Epoxy-Klebstoffe formuliert werden, bei denen die beiden Reaktionskomponenten erst kurz vor der Applikation miteinander vermischt werden, wobei die Aushärtung dann bei Raumtemperatur oder mäßig erhöhter Temperatur stattfindet. Als zweite Reaktionskomponente können hierbei die für zweikomponentige Epoxy-Klebstoffe an sich bekannten Reaktionskomponenten eingesetzt werden, beispielsweise Di- oder Polyamine, aminoterminierte Polyalkylenglykole (z. B. Jeffamine, Amino-Poly-THF) oder Polyaminoamide. Weitere Reaktivpartner können mercaptofunktionelle Prepolymere sein wie z. B. die flüssigen Thiokol-Polymere. Grundsätzlich können die erfindungsgemäßen Epoxyzusammensetzungen auch mit Carbonsäureanhydriden als zweiter Reaktionskomponente in zweikomponentigen Klebstofformulierungen ausgehärtet werden.

Neben den eingangs erwähnten Anwendungen können die erfindungsgemäßen Klebstoffzusammensetzungen auch als Vergußmassen in der Elektro- oder Elektronikindustrie, als Die-Attach-Klebstoff in der Elektronik zum Verkleben von Bauteilen auf Leiterplatten eingesetzt werden. Weitere Einsatzmöglichkeiten der erfindungsgemäßen Zusammensetzungen sind Matrix-Materialien für Verbundwerkstoffe wie z. B. faserverstärkte Verbundwerkstoffe.

Ein ganz besonders bevorzugtes Anwendungsfeld der erfindungsgemäßen Klebstoffe sind jedoch strukturelle Verklebungen im Fahrzeugbau.

Je nach Anforderungsprofil an den Klebstoff in bezug auf seine Verarbeitungseigenschaften, die Flexibilität, Schlagschälfestigkeit oder Zugfestigkeit können die Mengenverhältnisse der Einzelkomponenten in verhältnismäßig weiten Grenzen variieren. Typische Bereiche für die wesentlichen Komponenten sind:
- Komponente A): 5-25 Gew.-%, vorzugsweise 6-20 Gew.-%
- Komponente B): 5-30 Gew.-%, vorzugsweise 5-20 Gew.-%
- Komponente C): 10-60 Gew.-%, vorzugsweise 15-50 Gew.-%, wobei sich diese Komponente aus einem oder mehreren flüssigen und/oder festen Epoxidharzen zusammensetzt, wobei sie gegebenenfalls auch niedermolekulare Epoxide als Reaktivverdünner enthalten kann,
- Füllstoffe: 10-40 Gew.-%,
- Härterkomponente (für thermisch härtbare Einkomponentensysteme): 1-10 Gew.-%, vorzugsweise 3-8 Gew.-%,
- Beschleuniger: 0,01 bis 3 Gew.-%, vorzugsweise 0,1 bis 0,8 Gew.-%,
- Rheologie-Hilfsmittel (Thixotropiermittel): 0,5-5 Gew.-%.

Wie bereits eingangs erwähnt, steigen die Anforderungen an moderne Strukturklebstoffe im Fahrzeugbau ständig weiter an, da immer mehr Bauelemente auch tragender Natur durch Klebeverfahren gefügt werden. Wie bereits in dem Aufsatz von G. Kötting und S. Singh, "Anforderungen an Klebstoffe für Strukturverbindungen im Karosseriebau", Adhesion 1988, Heft 9, Seite 19 bis 26 ausgeführt, müssen die Klebstoffe zum einen praxisrelevante Aspekte der Fertigung erfüllen, hierzu gehören automatisierbare Verarbeitung in kurzen Taktzeiten, Haftung auf geölten Blechen, Haftung auf verschiedenen Blechsorten sowie Kompatibilität mit den Prozeßbedingungen der Lackierstraße (Beständigkeit gegen Wasch- und Phosphatierbäder, härtbar während des Einbrennens der KTL-Grundierung, Beständigkeit gegenüber den nachfolgenden Lackier- und Trockungsoperationen). Darüber hinaus müssen moderne Strukturklebstoffe auch im ausgehärteten Zustand steigende Festigkeits- und Verformungseigenschaften erfüllen. Hierzu gehören die hohe Korrosions- oder Biegesteifigkeit der strukturellen Bauteile sowie die Verformbarkeit bei mechanischer Belastung der Verklebung. Eine möglichst hohe Verformbarkeit der Bauteile gewährleistet einen erheblichen Sicherheitsvorteil bei stoßartiger Belastung (Crash-Verhalten) bei einem Unfall. Dieses Verhalten läßt sich am besten durch die Ermittlung der Schlagarbeit für ausgehärtete Verklebungen ermitteln, hierbei sind sowohl bei hohen Temperaturen bis +90 °C als auch insbesondere bei tiefen Temperaturen bis zu -40 °C ausreichend hohe Werte für die Schlagarbeit bzw. Schlagschälarbeit wünschenswert bzw. erforderlich. Dabei soll zusätzlich eine möglichst hohe Zugscherfestigkeit erzielt werden. Beide Festigkeiten müssen auf einer Vielzahl von Substraten, hauptsächlich geölten Blechen, wie z. B. Karosseriestahlblech, nach den verschiedensten Methoden verzinktes Stahlblech, Blechen aus diversen Aluminiumlegierungen oder auch Magnesiumlegierungen sowie mit organischen Beschichtungen vom Typ "Bonazinc" oder "Granocoat" im Coil-Coating-Verfahren-beschichteten Stahlbleche erzielt werden. Wie in den nachfolgenden Beispielen gezeigt werden wird, erfüllen die erfindungsgemäßen Klebstoffzusammensetzungen diese Anforderungen überraschender Weise in einem sehr hohen Ausmaß.

Die nachfolgenden Beispiele sollen die Erfindung näher erläutern. Bei den Zusammensetzungen sind dabei alle Mengenangaben Gewichtsteile wenn nicht anders angegeben.

### Allgemeine Herstellung für die Komponente A)

Unter Stickstoffatmosphäre und Rühren wurden bei 140 °C ein Carboxyterminiertes Poly(butadien-co-acrylnitril) (Hycar CTBN 1300 X 13) mit einem etwa 10 molaren Überschuß eines flüssigen DGEBA-Epoxidharzes 3 Stunden lang umgesetzt bis zur Konstanz der Reaktion.

### Allgemeine Herstellung für das Reaktionsprodukt B)

In einem rühr- und heizbaren Reaktionskessel wurden unter Stickstoffatmosphäre bei 120°C etwa 1,85 Äquivalente des Diisocyanats vorgelegt und anschließend ein Äquivalent des Polyols bei 120°C zugetropft, die Reaktion wurde 3 Stunden bei 120°C fortgeführt. Das entstandene Isocyanat-terminierte Polyurethan-Prepolymer wurde anschließend mit einem stöchiometrischen Überschuß an Polyphenol umgesetzt, wobei das Polyphenol rasch dem Reaktionsgemisch zugegeben wurde. Die Reaktion wurde während einer weiteren Stunde bei 120°C fortgeführt. Anschließend wurde diesem Reaktionsgemisch ein flüssiges Polyesterpolyol zugemischt. Das so erhaltene Gemisch wurde zur Herstellung des Klebstoffes eingesetzt.

### Allgemeine Herstellung des Klebstoffs

In einem Kneter wurden bei Raumtemperatur oder ggf. bei 80 °C die Komponenten A), B) sowie ein flüssiges Epoxidharz und ein festes Epoxidharz unter Zugabe der Füllstoffe, Härter, Beschleuniger und Rheologiehilfsmittel bis zur Homogenität gemischt und anschließend ggf. in noch warmem Zustand in die Lagerbehälter abgefüllt.

### Beispiel 1

Gemäß der allgemeinen Herstellung für das Reaktionsprodukt B) wurde aus 66,3 Gewichtsteilen Poly-THF-2000 (Firma BASF), 10,3 Gewichtsteilen Hexamethylendiisocyanat, 8,4 Gewichtsteilen Resorcin und 15,0 Gewichtsteilen Dynacol 7250 (Polyester der Firma Hüls) die Komponente B) hergestellt.

Die Komponente A) wurde nach dem oben angegebenen Verfahren aus Hycar CTBN 1300 X13 und einem flüssigen DGEBA-Harz hergestellt. Es resultierte eine Zusammensetzung mit 40 % Butylkautschuk und einem Epoxyäquivalentgewicht von 900, Viskosität bei 80°C 200 Pa.s.

### Beispiele 2-3

Aus den Komponenten B) gemäß Beispiel 1, der Komponente A) sowie einem flüssigen DGEBA-Harz (Epoxyäquivalentgewicht 189), Füllstoffen, Dicyandiamid als Härter sowie Beschleunigern und hydrophober Kieselsäure als Thixotropiermittel sowie gegebenenfalls dem thermoplastischen Polymerpulver wurden erfindungsgemäße Klebstoffzusammensetzungen hergestellt. Die Zusammensetzungen sind in der Tabelle 1 zusammengefaßt.

**Tabelle 1**

| Erfindungsgemäße Klebstoffe | | |
|---|---|---|
| **Beispiel** | **2** | **3** |
| Komponente B) aus Beispiel **1** | 17,5 | 17,5 |
| Komponente A) | 6,5 | 6,5 |
| DGEBA-Harz flüssig | 49,6 | 49,5 |
| Wollastonit | 17,5 | 14,5 |
| Dicyandiamid | 5,5 | 5,5 |
| Fenuron | 0,3 | |
| Imidazol / DGEBA-Addukt | | 0,5 |
| Polyvinylbutyral | | 3,0 |
| Kieselsäure, hydrophob | 3,0 | 3,0 |
| Wollastonit Füllstoff | | |
| Kieselsäure: Cabosil TS 720 (Cabot) | | |

In der Tabelle 2 sind die klebetechnischen Eigenschaften der erfindungsgemäßen Beispiele und die klebetechnischen Eigenschaften von Klebstoffen gemäß Stand der Technik gegenübergestellt. Bei dem Klebstoff des Vergleichsversuches 1 handelt es sich um Betamate 1044/3 der Firma Gurit Essex. Es wird angenommen, daß dieser Klebstoff auf der Basis der Lehre der EP-A-0 308 664 hergestellt wurde.

**Tabelle 2**

| Klebetechnische Eigenschaften | | | |
|---|---|---|---|
| **Beispiel** | **2** | **3** | **Vergleich 1** |
| Impact -40°C [J] | 13,1 | 9,6 | 3,3 |
| Impact -20°C [J] | 16,5 | 11,5 | 2,6 |
| impact 0°C [J] | 19,6 | 13,7 | 4,4 |
| Impact RT [J] | 21,8 | 14,4 | 5,2 |
| Impact 50°C [J] | 22,7 | 16,9 | 5,7 |
| Impact 90°C [J] | 21,5 | 18,2 | 7,0 |
| ZSF -40°C [Mpa] | 40,8 | 40,4 | 18,9 |
| ZSF RT [Mpa] | 29,5 | 29,4 | 16,6 |
| ZSF +90°C [Mpa] | 18,3 | 16,5 | 13,2 |
| 500 h SST | 27,8 | 24,4 | 15,2 |
| 1000 h SST | 26,9 | 23,4 | 13,3 |
| Impact: Schlagschältest nach ISO 11343 bei 2 m/sec | | | |
| RT: Raumtemperatur | | | |
| ZSF: Zugscherfestigkeit nach DIN 53283 auf Stahl 1403 1,5 mm dick | | | |
| SST: Salzsprühtest nach DIN 50021 | | | |
| kohäsives Bruchbild 100%, wenn nicht anders angegeben | | | |

Wie aus diesen Versuchsergebnissen ersichtlich ist, ist die Schlagschälarbeit gemäß ISO 11343 bei den erfindungsgemäßen Klebstoffen um ein Mehrfaches höher als bei den Klebstoffen gemäß Stand der Technik. Insbesondere bei sehr tiefen Temperaturen ist die Schlagschälarbeit der erfindungsgemäßen Klebstoffe deutlich besser als bei denen des Standes der Technik, ohne daß die Zugscherfestigkeit oder das Alterungsverhalten im Salzsprühtest darunter leidet.

## Patentansprüche

1. Verwendung von Zusammensetzungen, die
A) 5-25 Gew.-% eines Copolymeren mit mindestens einer Glasübergangstemperatur von -30°C oder niedriger und gegenüber Epoxiden reaktiven Gruppen oder ein Reaktionsprodukt dieses Copolymeren mit einem Polyepoxid im stöchiometrischen Überschuss sowie
B) 5-30 Gew.-% eines Reaktionsproduktes aus einem Polyurethan-Prepolymer und einem Polyphenol oder Aminophenol sowie
C) 10-60 Gew.-%, eines Epoxidharzes, wobei sich diese Komponente aus einem oder mehreren flüssigen und/oder festen Epoxidharzen zusammensetzt und wobei sie gegebenenfalls auch niedermolekulare Epoxide als Reaktivverdünner enthalten kann, und
D) 1-10 Gew.-% einer Härterkomponente enthalten
als Strukturklebstoffe mit guter Tieftemperatur-Schlagfestigkeit, wobei die Zugscherfestigkeit bei Raumtemperatur mindestens 15 MPa beträgt und bei einer Temperatur von 90°C immer noch eine Zugscherfestigkeit einer Stahlverklebung von mehr als 10 MPa gewährleistet wird und wobei die Tieftemperatur-Schlagfestigkeit durch eine Schlagschälarbeit nach ISO 11343 bei -20°C von mindestens bei 5 J bei 2 m/sec gekennzeichnet ist, wobei das Polyurethan-Prepolymer der Komponente B) zumindest teilweise aus hydroxyterminierten oder aminoterminierten Polytetramethylenglykolen aufgebaut ist.

2. Verwendung der Zusammensetzungen nach Anspruch 1, **dadurch gekennzeichnet, daß** das Copolymer der Komponente A) ein Copolymeres auf Butadienbasis ist.

3. Verwendung der Zusammensetzungen nach Anspruch 2, **dadurch gekennzeichnet, daß** das Copolymer der Komponente A) ein carboxylgruppenhaltiges Copolymeres auf der Basis von Butadien-Acrylnitril, Butadien-(Meth)acrylsäureestem, ein Butadien-Acrylnitril-Styrol-Copolymeres oder ein Butadien-(meth)acrylat-Styrol-Copolymeres ist.

4. Verwendung der Zusammensetzung nach Anspruch 1, **dadurch gekennzeichnet, daß** das Copolymer der Komponente A) ein Kem-Schale-Polymer ist, dessen Kempolymer ein Dien-Polymer oder ein (Meth)-acrylat-Polymer mit einer Glasübergangstemperatur von - 30°C oder niedriger und das gegebenenfalls mit 0,01 bis 5 Gew.% eines di-olefinischen Comonomers vemetzt sein kann und dessen Schalenpolymer eine Glasübergangstemperatur von 60°C oder höher hat und das aus Monomeren aus der Gruppe Alkyl(meth)acrylat, (Meth)acrylnitril, (Methyl)-Styrol und olefinisch ungesättigten Carbonsäuren oder Carbonsäureanhydriden oder deren Mischungen aufgebaut ist.

5. Verwendung der Zusammensetzungen nach mindestens einem der vorhergehenden Ansprüche, **dadurch gekennzeichnet, daß** als Komponente A) ein Addukt aus einem Epoxidharz und einem Copolymer gemäß Anspruch 2 bis 4 eingesetzt wird.

6. Verwendung der Zusammensetzungen nach mindestens einem der vorhergehenden Ansprüche, **dadurch gekennzeichnet, daß** die Komponente B) eine Verbindung gemäß nachfolgender Formel I ist,
R¹-[X-(C=O)-NH-R²-NH-(C=O)-Y-R³-(Z)ₘ]ₙ (I)
wobei
m = 1 oder 2,
n = 2 oder 3,
R¹ ein Rest eines Polyalkylenglykols nach dem Entfernen der funktionellen Gruppen (Hydroxyl- oder Amino-Gruppen),
R² = C₆- bis C₁₄-Alkyl, Aryl, Aralkyl (Rest eines Diisocyanates nach Entfernen der Isocyanatgruppen),
X,Y = -O-, -S- oder -NR⁴-, wobei R⁴ = H oder C₁- bis C₄-Alkyl oder Phenyl,
R³ = ein carbocyclisch-aromatischer oder araliphatischer m + 1 wertiger Rest mit direkt an den aromatischen Ring gebundenen Gruppen Z und Z = -OH oder -NHR⁴ (Rest eines Polyphenols oder Aminophenols nach Entfemen der funktionellen Gruppen nach Entfernen der Isocyanatgruppen),
bedeuten.

7. Verwendung der Zusammensetzung nach Anspruch 1 bis 6, **dadurch gekennzeichnet, daß** die Komponente B) nach Anspruch 6 in einem flüssigen Polyepoxid gelöst wurde.

8. Verwendung der Zusammensetzung nach Anspruch 1 bis 5, **dadurch gekennzeichnet, daß** die Komponente B) nach Anspruch 6 mit einem stöchiometrischen Überschuß eines Polyepoxids umgesetzt wurde.

9. Verwendung der Zusammensetzung nach mindestens einem der vorhergehenden Ansprüche, **dadurch gekennzeichnet, daß** sie zusätzlich zu den Komponenten A), B) und C)
D) einen latenten Härter aus der Gruppe Dicyandiamid, Guanamine, Guanidine, Aminoguanidine, feste aromatische Diamine und/oder einen Härtungsbeschleuniger sowie
E) gegebenenfalls Weichmacher, Reaktivverdünner, Rheologie-Hilfsmittel, Füllstoffe, Netzmittel und/oder Alterungsschutzmittel und/oder Stabilisatoren enthält.

10. Verwendung der Zusammensetzungen nach mindestens einem der vorherigen Ansprüche als hochfester, schlagfester Strukturklebstoff im Fahrzeugbau, Flugzeugbau oder Schienenfahrzeugbau mit einer Schlagschälarbeit von mindestens 5 J bei -20°C nach ISO 11343.

11. Verwendung der Zusammensetzungen gemäß Anspruch 10 zur Herstellung von Verbundwerkstoffen, als Vergußmassen in der Elektro- bzw. Elektronikindustrie sowie als Die-Attach-Klebstoff bei der Herstellung von Leiterplatten in der Elektronikindustrie.

12. Verwendung nach Anspruch 1, **dadurch gekennzeichnet, daß** die Zusammensetzung zusätzlich zu den Komponenten A), B) und C) gemäß einem der vorhergehenden Ansprüche
D)einen latenten Härter aus der Gruppe Dicyandiamid, Guanamine, Guanidine, Aminoguanidine, feste aromatische Diamine und/oder einen Härtungsbeschleuniger,
E)gegebenenfalls Weichmacher, Reaktivverdünner, Rheologie-Hilfsmittel, Füllstoffe, Netzmittel und/oder Alterungsschutzmittel und/oder Stabilisatoren
F) ein Polyesterpolyol mit einem Molekulargewicht zwischen 400 und 5000 sowie
G) gegebenenfalls ein thermoplastisches Polymerpulver enthält.

13. Verfahren zum Härten der Komponenten A), B), C), D), E), gegebenenfalls F) sowie gegebenenfalls G) gemäß Anspruch 12 durch Erwärmen der Zusammensetzung auf Temperaturen zwischen 80 und 210°C, vorzugsweise zwischen 120°C und 180°C.

14. Verfahren zum Verkleben von metallischen und/oder Verbundwerkstoffen **gekennzeichnet durch** die folgenden wesentlichen Verfahrensschritte
• Aufbringen der Klebstoffzusammensetzung gemäß Anspruch 12 auf mindestens eine der zu fügenden Substratoberflächen gegebenenfalls nach vorheriger Reinigung und/oder Oberflächenbehandlung
• Fügen der Bauteile
• gegebenenfalls Vorgelieren der Klebstoffzusammensetzung
• Aushärten der Verklebung **durch** Erwärmen der Bauteile auf Temperaturen zwischen 80°C und 210°C, vorzugsweise zwischen 120°C und 180°C.

## Claims

1. The use of compositions containing
A) 5-25% by weight of a copolymer having at least one glass transition temperature of -30°C or lower and epoxy-reactive groups or a reaction product of this copolymer with a polyepoxide in a stoichiometric excess and
B) 5-30% by weight of a reaction product of a polyurethane prepolymer and a polyphenol or aminophenol and
C) 10-60% by weight of an epoxy resin, whereby this component may be composed of one or more liquid and/or solid epoxy resins in which case it may optionally contain low molecular weight epoxides as reactive diluents, and
D) 1-10% by weight of a hardener component
as structural adhesives with good low-temperature impact strength, whereby the tensile shear strength at room temperature is at least 15 MPa and which still guarantees a tensile shear strength on steel of more than 10 MPa at a temperature of 90°C and whereby the impact peel energy at 2 m/sec according to ISO 11343 at -20°C is at least 5 J, whereby the polyurethane prepolymer of component B is made at least in part from hydroxy-terminated or amino-terminated polytetramethylene glycols.

2. The use of the compositions claimed in claim 1, **characterized in that** component A) is a butadiene-based copolymer.

3. The use of the compositions claimed in claim 2, **characterized in that** the copolymer of component A) is a carboxyl-containing copolymer based on butadiene/acrylonitrile, butadiene/(meth)acrylates, a butadiene/acrylonitrile/styrene copolymer or a butadiene/(meth)acrylate/styrene copolymer.

4. The use of the composition claimed in claim 1, **characterized in that** the copolymer of component A) is a core/shell polymer of which the core polymer is a diene polymer or a (meth)acrylate polymer with a glass transition temperature of -30°C or lower and which may optionally be crosslinked with 0.01 to 5% by weight of a diolefinic comonomer and of which the shell polymer has a glass transition temperature of 60°C or higher and is obtained from monomers from the group consisting of alkyl (meth)acrylate, (meth)acrylonitrile, (methyl) styrene and olefinically unsaturated carboxylic acids or carboxylic anhydrides or mixtures thereof.

5. The use of the compositions claimed in at least one of the preceding claims, **characterized in that** an adduct of an epoxy resin and a copolymer according to claims 2 to 4 is used as component A).

6. The use of the compositions claimed in at least one of the preceding claims, **characterized in that** component B) is a compound corresponding to formula I:
R¹-[X-(C=O)-NH-R²-NH-(C=O)-Y-R³-(Z)ₘ]ₙ (I)
in which
m = 1 or 2,
n = 2 or 3,
R¹ is a residue of a polyalkylene glycol after removal of the functional groups (hydroxyl or amino groups),
R² = C₆₋₁₄ alkyl, aryl, aralkyl (residue of a diisocyanate after removal of the isocyanate groups),
X,Y = -O-, -S- or -NR⁴-, where R⁴ = H or C₁₋₄ alkyl or phenyl,
R³ is a carbocyclic-aromatic or araliphatic m+1-functional residue with groups Z directly attached to the aromatic ring and Z = -OH or -NHR⁴ (residue of a polyphenol or aminophenol after removal of the functional groups after removal of the isocyanate groups).

7. The use of the composition claimed in claims 1 to 6, **characterized in that** component B) according to claim 6 is dissolved in a liquid polyepoxide.

8. The use of the composition claimed in claims 1 to 5, **characterized in that** component B) according to claim 6 is reacted with a stoichiometric excess of a polyepoxide.

9. The use of the composition claimed in at least one of the preceding claims, **characterized in that**, in addition to components A), B) and C), it contains
D) a latent hardener from the group consisting of dicyanodiamide, guanamines, guanidines, aminoguanidines, solid aromatic diamines and/or a hardening accelerator and
E) optionally plasticizers, reactive diluents, rheology aids, fillers, wetting agents and/or antiagers and/or stabilizers.

10. The use of the compositions claimed in at least one of the preceding claims as a high-strength high-impact structural adhesive with an impact peel energy of at least 5 J at -20°C (to ISO 11343) in vehicle construction, aircraft construction or rail vehicle construction.

11. The use of the compositions claimed in claim 10 for the production of composite materials, as potting compounds in the electrical and electronics industries and as a die-attach adhesive in the production of circuit boards in the electronics industry.

12. The use of the compositions claimed in claim 1, **characterized in that**, in addition to components A), B) and C) according to any of the preceding claims, it contains
D) a latent hardener from the group consisting of dicyanodiamide, guanamines, guanidines, aminoguanidines, solid aromatic diamines and/or a hardening accelerator,
E) optionally plasticizers, reactive diluents, rheology aids, fillers, wetting agents and/or antiagers and/or stabilizers,
F) a polyester polyol with a molecular weight of 400 to 5,000 and
G) optionally a thermoplastic polymer powder.

13. A process for hardening components A), B), C), D), E), optionally F) and optionally G) according to claim 12 by heating the composition to temperatures of 80°C to 210°C and preferably to temperatures of 120°C to 180°C.

14. A process for bonding metallic and/or composite materials comprising the following key process steps:
• applying the adhesive composition claimed in claim 12 to at least one of the substrate surfaces to be joined, optionally after cleaning and/or surface treatment
• fitting together the parts to be joined
• optionally pregelling the adhesive composition and
• curing the bond by heating the parts to temperatures of 80°C to 210°C and preferably to temperatures of 120°C to 180°C.

## Revendications

1. Utilisation de compositions qui contiennent
A) 5-25% en poids d'un copolymère présentant au moins une température de transition vitreuse de -30°C ou moins et des groupes réactifs par rapport aux époxydes ou un produit de réaction de ce copolymère avec un polyépoxyde en un excès stoechiométrique ainsi que
B) 5-30% en poids d'un produit de réaction d'un prépolymère de polyuréthanne et d'un polyphénol ou d'un aminophénol ainsi que
C) 10-60% en poids d'une résine époxyde, ce composant étant constitué par une ou plusieurs résines époxyde liquides et/ou solides et pouvant le cas échéant également contenir des époxydes de bas poids moléculaire comme diluant de réactifs et
D) 1-10% en poids d'un composant durcisseur
comme adhésifs de structure avec une bonne résistance aux impacts à basse température, la résistance à la traction par cisaillement à température ambiante étant d'au moins 15 MPa et, à une température de 90°C, une résistance à la traction par cisaillement de plus de 10 MPa étant encore assurée dans le cas d'un assemblage adhésif d'acier et la résistance aux impacts à basse température étant **caractérisée par** un travail de clivage par impacts selon la norme ISO 11343 à -20°C d'au moins 5 J à 2 m/sec, le prépolymère de polyuréthanne du composant B) étant constitué au moins partiellement par des polytétraméthylèneglycols présentant une terminaison hydroxy ou amino.

2. Utilisation des compositions selon la revendication 1, **caractérisée en ce que** le copolymère du composant A) est un copolymère à base de butadiène.

3. Utilisation des compositions selon la revendication 2, **caractérisée en ce que** le copolymère du composant A) est un copolymère contenant des groupes carboxyle à base de butadiène-acrylonitrile, de butadiène-esters de l'acide (méth)acrylique, un copolymère de butadiène-acrylonitrile-styrène ou un copolymère de butadiène-(méth)acrylate-styrène.

4. Utilisation de la composition selon la revendication 1, **caractérisée en ce que** le copolymère du composant A) est un polymère noyau-coquille, dont le polymère du noyau est un polymère de diène ou un polymère de (méth)acrylate présentant une température de transition vitreuse de - 30°C ou moins et qui peut le cas échéant être réticulé avec 0,01 à 5% en poids d'un comonomère dioléfinique et dont le polymère de la coquille présente une température de transition vitreuse de 60°C ou plus et est élaboré à partir de monomères du groupe constitué par le (méth)acrylate d'alkyle, le (méth)acrylonitrile, le (méthyl)styrène et des acides carboxyliques ou des anhydrides d'acides carboxyliques oléfiniquement insaturés ou leurs mélanges.

5. Utilisation des compositions selon au moins l'une quelconque des revendications précédentes, **caractérisée en ce qu'**on utilise comme composant A) un produit d'addition d'une résine époxyde et d'un copolymère selon la revendication 2 à 4.

6. Utilisation des compositions selon au moins l'une quelconque des revendications précédentes, **caractérisée en ce que** le composant B) est un composé selon la Formule 1 ci-après
R¹-[X-(C=O)-NH-R²-NH-(C=O)-Y-R³-(Z)ₘ]ₙ (1)
où
m = 1 ou 2,
n = 2 ou 3,
R¹ signifie un radical d'un polyalkylèneglycol après l'élimination des groupes fonctionnels (groupes hydroxyle ou amino),
R² = alkyle en C₆ à C₁₄, aryle, aralkyle (radical d'un diisocyanate après élimination des groupes isocyanate),
X,Y = -O-, -S- ou -NR⁴-, où R⁴ = H ou alkyle en C₁ à C₄ ou phényle,
R³ = un radical carbocyclique aromatique ou araliphatique de valence m + 1 avec des groupes Z liés directement sur le cycle aromatique et
Z = -OH ou -NHR⁴ (radical d'un polyphénol ou d'un aminophénol après élimination des groupes fonctionnels après élimination des groupes isocyanate).

7. Utilisation de la composition selon la revendication 1 à 6, **caractérisée en ce que** le composant B) selon la revendication 6 est dissous dans un polyépoxyde liquide.

8. Utilisation de la composition selon la revendication 1 à 5, **caractérisée en ce que** le composant B) selon la revendication 6 a été transformé avec un excès stoechiométrique d'un polyépoxyde.

9. Utilisation de la composition selon au moins l'une quelconque des revendications précédentes, **caractérisée en ce qu'**elle contient, en plus des composants A), B) et C)
D) un durcisseur latent du groupe constitué par le dicyanodiamide, les guanamines, les guanidines, les aminoguanidines, les diamines aromatiques solides et/ou un accélérateur de durcissement ainsi que
E) le cas échéant des plastifiants, des diluants de réactifs, des adjuvants de rhéologie, des charges, des agents mouillants et/ou des agents de protection contre le vieillissement et/ou des stabilisants.

10. Utilisation des compositions selon au moins l'une quelconque des revendications précédentes comme adhésif de structure hautement solide, résistant aux impacts dans la construction automobile, aéronautique ou de trains avec travail de clivage par impacts selon la norme ISO 11343 à -20 °C d'au moins 5 J.

11. Utilisation des compositions selon la revendication 10 pour la fabrication de matériaux composites, comme masses de scellement dans l'industrie électrique ou électronique ainsi que comme adhésif pour puces lors de la fabrication de circuits imprimés dans l'industrie électronique.

12. Utilisation selon la revendication 1, **caractérisée en ce que** la composition contient, en plus des composants A), B) et C) selon l'une quelconque des revendications précédentes
D) un durcisseur latent du groupe constitué par le dicyanodiamide, les guanamines, les guanidines, les aminoguanidines, les diamines aromatiques solides et/ou un accélérateur de durcissement,
E) le cas échéant des plastifiants, des diluants de réactifs, des adjuvants de rhéologie, des charges, des agents mouillants et/ou des agents de protection contre le vieillissement et/ou des stabilisants
F) un polyesterpolyol présentant un poids moléculaire entre 400 et 5000 ainsi que
G) le cas échéant une poudre polymère thermoplastique.

13. Procédé pour le durcissement des composants A), B), C), D), E), le cas échéant F) ainsi que le cas échéant G) selon la revendication 12 par chauffage de la composition à des températures entre 80 et 210°C, de préférence entre 120°C et 180°C.

14. Procédé pour le collage de matériaux métalliques et/ou composites **caractérisé par** les étapes de procédé essentielles suivantes
• application de la composition adhésive selon la revendication 12 sur au moins une des surfaces des substrats à assembler, le cas échéant après nettoyage et/ou traitement de surface préalable
• assemblage des pièces
• le cas échéant prégélification de la composition adhésive
• durcissement du collage par chauffage des pièces à des températures entre 80°C et 210°C, de préférence entre 120°C et 180°C.
